# DEMANDE DE BREVET EUROPEEN

(11) **EP 4 226 766 A1**
(43) Date de publication de la demande: **16.08.2023**
(21) Numéro de dépôt: 23305146.5
(22) Date de dépôt: 03.02.2023
(51) Int. Cl.: A01M 7/00, A01M 1/20, A01M 21/00, B64D 1/18, B64U 10/14, B64U 70/92, B64U 101/30, B64U 101/40, B64U 101/45

(54) **DISPOSITIF DE DESTRUCTION DE NUISIBLES ET SYSTÈME ASSOCIÉ**

(30) Priorité: 09.02.2022 FR 2201149
(71) Demandeur: Cryodrones, 92000 Nanterre (FR)
(72) Inventeur: GROS, Richard, 92000 NANTERRE (FR); GROS, Elouan, 92000 NANTERRE (FR); GROS, Isciane, 92000 NANTERRE (FR)
(74) Mandataire: Icosa

(57) **Abrégé**

L'invention concerne un dispositif (100) de destruction de nuisibles comprenant une unité de commande (120) et un drone (110) embarquant : un réservoir (112) de fluide à basse température, une tête (114) de distribution du fluide à basse température, une vanne (115) agencée entre le réservoir (112) et la tête de distribution (114), et un capteur thermique (116) configuré pour délivrer un signal thermique,
l'unité de commande (120) étant configurée pour déterminer une température courante d'une zone cible à partir du signal thermique, et pour mettre en oeuvre, tant que la température courante de la zone cible est supérieure ou égale à un seuil létal prédéterminé, au moins une phase de refroidissement dans laquelle l'unité de commande (120) actionne la vanne (115) pour qu'elle se trouve dans sa position ouverte.

## Description

### DOMAINE DE L'INVENTION

La présente invention concerne un dispositif de destruction de nuisibles.

L'invention a également pour objet un système de destruction de nuisibles comprenant un tel dispositif de destruction de nuisibles.

L'invention s'applique au domaine du contrôle de nuisibles.

### ÉTAT DE LA TECHNIQUE

Le contrôle de nuisibles (animaux et/ou végétaux), c'est-à-dire leur destruction totale ou partielle, est un enjeu important pour l'environnement, la santé et le bien-être des personnes.

Il est connu d'avoir recours à des produits chimiques (insecticides ou désherbants) ou bactériologique pour réaliser un tel contrôle de nuisibles. Par exemple, un épandage de tels produits chimiques est réalisé sur des foyers de nuisibles pour leur destruction.

Cependant, de telles méthodes ne donnent pas entière satisfaction.

En effet, les produits chimiques utilisés pour le contrôle de nuisibles présentent généralement une toxicité importante susceptible d'impacter négativement la santé des personnes et l'environnement. Il est connu, par exemple par la demande de brevet chinoise CN109533337, de diluer de l'ozone dans l'eau pour la pulvérisation. Or, l'ozone est extrêmement nocif pour les poumons, les reins, le cerveau et les yeux des êtres humains. De plus, l'utilisation répétée de ces produits chimiques est susceptible de provoquer une accoutumance chez les nuisibles, qui deviennent alors plus résistants. Ceci implique l'application de plus en plus régulière et/ou de plus en plus concentrée de ces produits.

En outre, le recours à l'épandage conduit généralement à une contamination excessive de l'environnement, un effet nocif sur des espèces non ciblées, dans une zone s'étendant bien au-delà de la cible à traiter. De plus, un tel épandage, décrit par exemple dans la demande de brevet chinoise CN109533337, implique une dépense inutile en ressources, notamment en énergie et en produits chimiques utilisés.

Un but de l'invention est donc de proposer un dispositif permettant le contrôle de nuisibles avec un meilleur rendement et de manière plus respectueuse de l'environnement que les dispositifs connus.

### RÉSUMÉ

Dans ce but, l'invention a pour objet un dispositif de destruction de nuisibles du type précité, comprenant un drone embarquant :
- un réservoir configuré pour stocker un fluide à basse température ;
- une tête de distribution du fluide à basse température ;
- une vanne agencée entre le réservoir et la tête de distribution, et configurée pour permettre une communication fluidique sélective entre le réservoir et la tête de distribution ;
- un capteur thermique configuré pour délivrer un signal thermique représentatif d'une température d'une zone cible prédéterminée par rapport à la tête de distribution,
le dispositif de destruction de nuisibles comprenant, en outre, une unité de commande configurée pour, au cours d'une étape d'élimination pendant laquelle le drone se trouve dans une position d'élimination dans laquelle la tête de distribution se trouve à une distance prédéterminée d'un nuisible :
- déterminer une température courante de la zone cible à partir du signal thermique délivré par le capteur thermique ; et
- mettre en oeuvre, tant que la température courante de la zone cible est supérieure ou égale à un seuil létal prédéterminé, au moins une phase de refroidissement dans laquelle l'unité de commande actionne la vanne pour qu'elle se trouve dans sa position ouverte.

En effet, l'utilisation d'un fluide à basse température (inférieure ou égale à un seuil létal prédéterminé) permet de détruire les nuisibles en les refroidissant jusqu' à une température létale. Ainsi, aucun produit toxique n'est utilisé, rendant utilisation du dispositif respectueuse de l'environnement. Ceci est d'autant plus vrai que l'utilisation de froid ne crée pas d'accoutumance chez les nuisibles.

De plus, l'utilisation d'une unité de commande associée à un capteur thermique permet l'automatisation de la destruction des nuisibles par une mise en oeuvre, répétée ou continue, de la phase de refroidissement jusqu'à obtention d'une température de la zone cible inférieure au seuil létal. En d'autres termes, lorsque le dispositif de destruction est positionné de sorte qu'un nuisible se trouve dans la zone cible, le dispositif de la présente invention met automatiquement en oeuvre une ou plusieurs étapes de refroidissement jusqu'à la destruction du nuisible. De cette façon, seule la quantité de fluide à basse température (également désigné par l'expression « le fluide ») nécessaire à la destruction du nuisible est distribuée : le rendement et l'efficacité du dispositif de destruction sont donc optimaux.

En outre, l'utilisation d'une tête de distribution permet l'application ciblée du fluide à basse température, ce qui est également favorable pour le rendement.

Suivant d'autres aspects avantageux de l'invention, le dispositif de destruction de nuisibles comporte une ou plusieurs des caractéristiques suivantes, prise(s) isolément ou suivant toutes les combinaisons techniquement possibles.

Selon un aspect avantageux de l'invention, le drone embarque également un capteur optique configuré pour acquérir au moins une image, l'unité de commande étant, en outre, configurée pour :
- au cours d'une étape de recherche, analyser chaque image acquise par le capteur optique pour déterminer la présence et la position d'au moins un nuisible ; et
- au cours d'une étape d'approche, piloter le drone pour amener le drone dans la position d'élimination du nuisible.

En effet, les méthodes connues de destruction de nuisibles reposant sur l'utilisation d'un drone requièrent généralement la supervision continue d'un opérateur afin de localiser le nuisible et piloter ledit drone. Il en résulte un avantage limité par rapport aux méthodes entièrement manuelles.

Dans la présente invention, l'analyse par l'unité de commande des images acquises par le capteur optique permet une recherche automatique du nuisible et une détermination de sa position sans supervision par un opérateur.

Selon un autre aspect avantageux de l'invention, l'unité de commande est également configurée pour analyser chaque image acquise afin d'identifier chaque nuisible présent parmi au moins un nuisible prédéterminé, le seuil létal étant fonction du nuisible présent identifié.

En effet, la connaissance du seuil létal permet de refroidir le nuisible identifié jusqu' au seuil létal de température correspondant (donc le détruire) en évitant de déverser une quantité excessive de fluide.

Selon un autre aspect avantageux de l'invention, l'au moins un nuisible est un nuisible cible associé à une direction de recherche prédéterminée. L'unité de commande est alors également configurée pour, au cours de l'étape de recherche, commander le drone de façon à ce qu'il se déplace dans un périmètre prédéterminé suivant la direction de recherche associée au nuisible cible.

Cette caractéristique permet au dispositif d'effectuer une recherche efficace du nuisible par optimisation de la trajectoire de recherche. Cela conduit donc à une économie de ressources énergétiques ainsi qu'une amélioration de la faculté à détecter les nuisibles recherchés.

Selon un autre aspect avantageux de l'invention, le nuisible cible est une espèce héliophile, la direction de recherche présentant une composante non nulle orientée du sud vers le nord.

Selon un autre aspect avantageux de l'invention, l'unité de commande est également configurée pour, au cours de l'étape de recherche, comparer, à un seuil de vérification prédéterminé, une température courante d'un élément-candidat détecté sur au moins une image, et confirmer la présence du nuisible comme étant l'élément-candidat détecté si la température courante de l'élément-candidat est supérieure ou égale au seuil de vérification prédéterminé.

En effectuant une telle comparaison, il est possible de confirmer que l'élément-candidat est bien un être vivant (en particulier un insecte), ce qui renforce la fiabilité de l'identification.

Selon un autre aspect avantageux de l'invention, le fluide à basse température est de l'azote liquide ou du dioxyde de carbone liquide, le réservoir étant, de préférence, de type Dewar.

Selon un autre aspect avantageux de l'invention, le dispositif comprend, en outre, au moins une structure de protection d'une voilure tournante du drone.

En effet, cela permet d'éviter l'endommagement du drone lors des étapes de recherche, d'approche et de destruction des nuisibles.

L'invention concerne également un système de destruction de nuisibles, comprenant :
- au moins un dispositif de destruction de nuisibles tel que décrit ci-dessus ; et
- une station d'accueil comprenant un organe d'approvisionnement en fluide à basse température du réservoir et/ou en énergie de l'au moins un dispositif de destruction de nuisibles.

En effet, l'utilisation d'une station d'accueil offre la possibilité d'approvisionnement en fluide et/ou en énergie, ce qui accroît l'autonomie de chaque dispositif de destruction.

Finalement, l'utilisation de plusieurs drones permet une plus grande couverture du périmètre de recherche et donc un traitement plus rapide des nuisibles.

Selon un autre aspect avantageux de l'invention, l'unité de commande est agencée dans la station d'accueil, l'unité de commande et l'au moins un drone étant configurés pour communiquer sans fil entre eux.

De cette façon, une commande déportée (et centralisée) des drones est réalisée, en conformité avec la législation en vigueur. Une telle commande centralisée autorise également une bonne coordination entre les dispositifs de destruction lors de leur déploiement.

### DÉFINITIONS

Par « **drone** », il est entendu, au sens de la présente invention, un véhicule terrestre, aquatique ou aérien, sans équipage et piloté de manière automatique ou manuelle.

Par « **réservoir Dewar** », « **vase Dewar** » ou « **Dewar** », il est entendu, au sens de la présente invention, un réservoir présentant une isolation thermique compatible avec, notamment, le stockage de liquides (en particulier sous pression) à très basse température.

### DESCRIPTION DES FIGURES

[Fig. 1] La **Figure 1** est une représentation schématique d'un système de destruction de nuisibles selon l'invention ;
[Fig. 2] La **Figure 2** est une représentation schématique d'un dispositif de destruction de nuisibles du système de la figure 1 ;
[Fig. 3] La **Figure 3** est une représentation schématique illustrant une pluralité de dispositifs de destruction du système de la figure 1 durant une étape de recherche de nuisibles héliophiles ; et
[Fig. 4] La **Figure 4** est une représentation schématique illustrant le dispositif de la figure 2 durant une étape d'élimination de chenilles processionnaires.

### DESCRIPTION DÉTAILLÉE

### Système 1

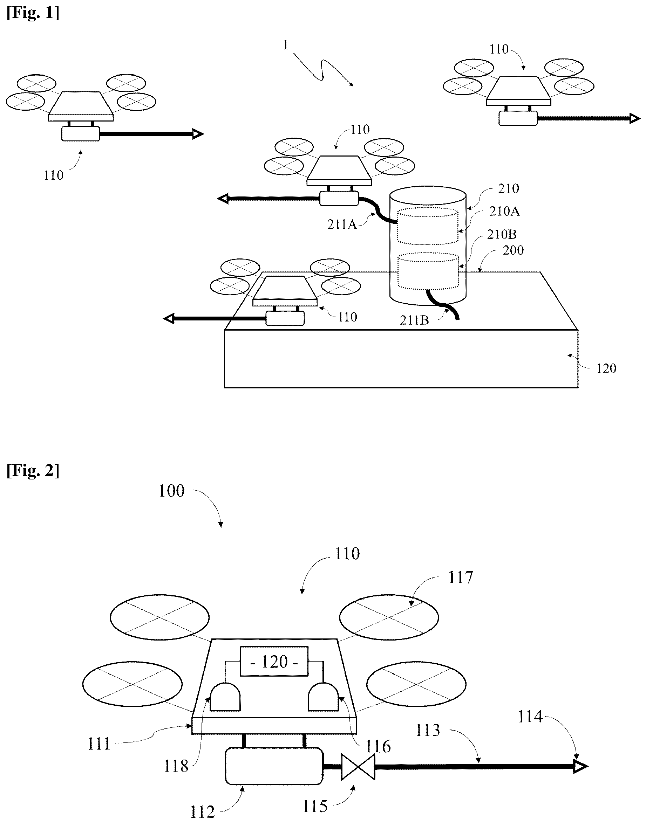

Un système 1 de destruction de nuisibles selon l'invention est illustré par la figure 1.

Le système 1 de destruction est configuré pour détruire des nuisibles.

Les nuisibles peuvent être des végétaux ou des animaux. Par exemple, les nuisibles végétaux sont des mauvaises herbes (également appelées « adventices ») ou des végétaux invasifs. Selon un autre exemple, les nuisibles animaux sont préférentiellement des arthropodes terrestres ou volants tels que les insectes ou les araignées.

La destruction des nuisibles peut être individuelle, c'est-à-dire que chaque nuisible est détruit individuellement. Alternativement, la destruction est collective, en neutralisant une pluralité de nuisibles en une seule fois. Un exemple de destruction collective est la destruction d'insectes directement dans leur nid.

Comme cela ressortira de la description qui va suivre, la destruction des nuisibles est réalisée grâce à l'utilisation d'un fluide à basse température.

Par « fluide à basse température », il est entendu, au sens de la présente invention, un fluide dont la température est inférieure ou égale à un seuil létal de température (également appelé « seuil de résistance physiologique instantané ») d'un nuisible à détruire. Par exemple, un fluide est dit « à basse température » lorsque sa température est inférieure à 0°C (degré Celsius), de préférence inférieure à -7°C. Une telle température du fluide est susceptible de réduire la température de l'individu en deçà de son seuil de résistance physiologique instantané (en anglais, « supercooling point »). Ceci est avantageux dans le cas d'animaux présentant la faculté de survivre une courte durée à une température relativement faible (typiquement de l'ordre de quelques degrés Celsius) en entrant dans un état comateux, puis en en ressortant vivants lorsque la température augmente de nouveau. En effet, une super-congélation (en anglais, « supercooling ») des cellules du nuisible rend caduque un tel mécanisme de survie.

Le fluide est, par exemple, de l'azote liquide (dont la température, à pression atmosphérique, est inférieure ou égale à -196°C), ou encore du dioxyde de carbone (CO₂) liquide (dont la température peut atteindre -56,6°C lorsqu'il est soumis à une pression minimale de 519 kilopascal). Selon un autre exemple, le fluide est de l'air liquide (dont la température est inférieure à -140,7°C). Le recours à de telles espèces chimiques est avantageux, dans la mesure où elles ne présentent pas de caractère nocif.

Le système 1 comprend au moins un dispositif 100 de destruction de nuisibles et une station d'accueil 200.

### Dispositif de destruction 100

Le dispositif de destruction 100 comprend un drone 110 et une unité de commande 120 configurés pour communiquer entre eux. En particulier, l'unité de commande 120 est configurée pour commander le fonctionnement du drone 110.

### Drone

Le drone 110, représenté plus en détail sur la figure 2.

Le drone 110 comprend un corps 111, un réservoir 112 de fluide à basse température, une tête 114 de distribution du fluide à basse température, une vanne 115 agencée entre le réservoir 112 et la tête de distribution 114, et un capteur thermique 116. De préférence, le drone 110 embarque également un capteur optique 118.

### Corps 111

Le corps 111 forme la base structurelle du drone 110. Sur le corps 111 sont fixés des éléments mobiles destinés à la mise en mouvement du drone 110.

Par exemple, dans le cas où le drone 110 est un véhicule terrestre, les éléments mobiles comprennent des roues, des chenilles ou des membres articulés. En alternative, dans le cas où le drone 110 est un véhicule aérien, les éléments mobiles comprennent une ou plusieurs voilures tournantes 117. De préférence, le drone est un véhicule aérien comprenant au moins quatre voilures tournantes 117 comme représenté schématiquement sur les figures 1 à 4.

Avantageusement, le drone 110 présente une envergure comprise entre 50 cm et 150 cm, de préférence entre 50 cm et 90 cm. Ceci est avantageux, dans la mesure où de telles dimensions permettent d'atteindre des nuisibles dans des endroits exigus.

De préférence, le drone 110 comprend une structure de protection (non représentée) configurée pour protéger les éléments mobiles du drone 110. Par exemple, dans le cas où le drone 110 est un aéronef muni d'une voilure tournante 117, la structure de protection comprend une cage agencée autour de la voilure tournante 117, à distance d'un volume maximal occupé par la voilure tournante 117 en rotation.

### Réservoir 112

Le réservoir 112 est configuré pour stocker le fluide à basse température destiné à la destruction des nuisibles.

Le réservoir 112 peut être tout type de réservoir présentant une isolation thermique suffisante pour maintenir le fluide dans une plage de température prédéterminée durant une durée prédéterminée, typiquement la durée du traitement d'un périmètre donné. De préférence, le réservoir 112 est de type Dewar.

Optionnellement, le réservoir 112 est thermiquement couplé à un élément de refroidissement (non représenté) configuré pour transférer de la chaleur du réservoir 112 vers l'environnement extérieur. Une telle caractéristique est avantageuse, dans la mesure où le recours à l'élément de refroidissement augmente la durée pendant laquelle la température du fluide contenu dans le réservoir 122 est maintenue dans la plage de température prédéterminée.

De préférence, le réservoir 112 est placé sous le corps 111 afin d'augmenter la stabilité du drone 110.

### Tête de distribution 114

La tête de distribution 114 est en communication fluidique avec le réservoir 112 pour permettre l'acheminement du fluide à basse température depuis le réservoir vers la tête de distribution 114.

Par exemple, la tête de distribution 114 est l'extrémité distale d'un tube 113 (ou « perche ») dont l'autre extrémité (c'est-à-dire l'extrémité proximale) est reliée au réservoir 112.

Par exemple, la longueur de la perche 113 est choisie en fonction de l'accessibilité des nuisibles à détruire. Par exemple, pour un nuisible typiquement situé sur un sol dégagé de tout obstacle, la longueur de la perche 113 peut être petite (par exemple de quelques centimètres à 1 mètre) car le drone 110 peut s'en approcher facilement. Pour des nuisibles moins accessibles, la perche 113 peut être plus longue afin que le drone puisse distribuer le fluide sur le nuisible tout en étant positionné loin de ce dernier.

La perche 113 peut être fixe ou mobile relativement au corps 111 du drone.

Dans le but de distribuer le fluide, la tête de distribution 114 peut comprendre un orifice permettant au fluide de se déverser sur le nuisible. De préférence, le diamètre de l'orifice est inférieur ou égal à une dimension caractéristique du nuisible, par exemple sa longueur. Une telle caractéristique est avantageuse, dans la mesure où elle autorise, dans le cas d'une destruction individuelle de nuisibles, une application ciblée du fluide à basse température.

Alternativement, la tête de distribution 114 comprend une pluralité d'orifices. Ceci permet d'obtenir un effet « douche » et de détruire, en une seule application du fluide, plusieurs nuisibles regroupés (destruction collective).

De préférence, la tête de distribution 114 comprend un élément de perçage configuré pour transpercer la paroi d'un nid de nuisible. Ceci est avantageux, dans la mesure où une telle paroi est susceptible d'être trop rigide pour permettre à la tête de distribution de pénétrer dans le nid en l'absence dudit élément de perçage (comme dans le cas des nids de frelons ou de guêpes). Une telle caractéristique est avantageuse, dans la mesure où elle permet de distribuer le fluide à l'intérieur du nid, directement sur les nuisibles, ce qui favorise une destruction collective des nuisibles.

Par exemple, l'élément de perçage comprend un foret.

Alternativement, l'extrémité distale de la tête de distribution 114 peut être configurée pour percer le nid, par exemple en présentant un biseau. Dans ce cas, l'extrémité biseauté forme l'élément de perçage. Dans ce cas, outre la forme (pointue) de la tête de distribution, l'énergie cinétique de déplacement du drone participe à l'insertion de ladite tête de distribution 114.

### Vanne 115

Comme indiqué précédemment, la vanne 115 est agencée entre le réservoir 112 et la tête de distribution 114.

La vanne 115 présente une position fermée, dans laquelle la vanne 115 empêche la circulation du fluide entre le réservoir 112 et la tête de distribution 114, et une position ouverte, dans laquelle le fluide est susceptible de s'écouler du réservoir 112 vers tête de distribution 114.

Comme cela sera décrit ultérieurement, l'unité de commande 120 est configurée pour commander la position de la vanne 115.

La vanne 115 est, par exemple, une électrovanne.

### Capteur thermique 116

Le capteur thermique 116 est configuré pour délivrer un signal (dit « signal thermique ») représentatif de la température d'une zone cible prédéterminée par rapport à la tête de distribution.

En particulier, la zone cible est une zone se trouvant au voisinage de la tête de distribution, par exemple une zone englobant la tête de distribution 114.

De préférence, le capteur thermique 116 permet une mesure sans contact de la température de la zone cible. Par exemple, le capteur thermique 116 est un capteur infrarouge ou une caméra infrarouge.

Grâce à un tel capteur thermique 116, par une orientation judicieuse du drone 110 suivant laquelle le nuisible se trouve dans la zone cible, une température du nuisible est accessible. De cette façon, l'unité de commande 120 est apte à évaluer la destruction effective du nuisible. La mesure directe de la température du nuisible, et non pas celle de son environnement (air ambiant, par exemple) est avantageuse, dans la mesure où seul l'accès à la température du nuisible lui-même permet de s'assurer de sa destruction effective.

### Capteur optique 118

Comme indiqué précédemment, de préférence, le drone 110 embarque un capteur optique 118 afin d'acquérir des images de l'environnement du drone 110.

Le capteur optique 118 peut être tout type de capteur configuré pour acquérir des images en 2 ou en 3 dimensions dans une ou plusieurs plages de longueurs d'ondes. Par exemple, le capteur optique 118 est une caméra configurée pour acquérir des images dans le domaine visible (c'est-à-dire entre 390 et 800 nm).

Le capteur optique 118 peut être un capteur stéréoscopique comprenant deux caméras permettant de prendre deux vues d'une même scène sous deux angles différents, ou encore une combinaison d'une caméra et d'un télémètre. Dans les deux cas, les images acquises par le capteur optique 118 peuvent être utilisées pour déterminer les distances entre le drone et les objets environnants.

Alternativement, lorsque le capteur thermique 116 est configuré pour acquérir des images (par exemple dans le cas d'une caméra infrarouge), le capteur thermique 116 joue également le rôle du capteur optique 118.

### GPS

De façon optionnelle, le drone 110 comprend un système mondial de positionnement par satellite (ou « *Global Positioning System* », GPS, en anglais) configuré pour déterminer la position courante du drone 110.

### Communication

Le système 1 de destruction de nuisibles peut comprendre plus d'un dispositif de destruction 100. Cette caractéristique est avantageuse dans la mesure où elle donne lieu à une couverture plus rapide d'un grand périmètre d'intervention. Dans ce cas, le drone 110 de chacun des dispositifs de destruction 100 peut être configuré pour communiquer avec tout ou partie des autres drones 110 du système 1. Ceci est avantageux, dans la mesure où cette communication peut, par exemple, permettre une couverture optimale du périmètre de recherche par chacun des drones grâce à l'échange des positions respectives des drones, de la position des nuisibles détectés et/ou détruits, des zones déjà traitées, etc. De préférence, cette communication est une communication sans fil.

### Unité de commande 120

Comme indiqué précédemment, l'unité de commande 120 est configurée pour commander le fonctionnement du drone 110.

Selon un mode de réalisation illustré par la figure 2, l'unité de commande 120 est embarquée à bord du drone 110.

Alternativement, l'unité de commande 120 n'est pas embarquée à bord du drone 110. Dans ce cas, l'unité de commande 120 est, par exemple, installée sur ou dans la station d'accueil 200 du système 1, comme illustré par la figure 1. La communication entre l'unité de commande 120 et le drone 110 se fait alors sans fil.

Dans ce dernier mode de réalisation, et lorsque le système 1 de destruction de nuisibles comprend plus d'un drone 110, tous les drones 110 du système 1 sont susceptibles de communiquer avec la même unité de commande 120, configurée pour commander le fonctionnement de chacun des drones 110.

L'unité de commande 120 est également configurée pour déterminer la température de la zone cible à partir du signal thermique délivré par le capteur thermique 116.

L'unité de commande 120 est également configurée pour faire commuter la vanne 115 entre sa position fermée et sa position ouverte, de façon à commander la distribution du fluide à basse température.

L'unité de commande 120 peut, en outre, être configurée pour piloter le drone 110. Alternativement, l'unité de commande 120 n'est configurée pour piloter le drone. Dans ce cas, le pilotage est effectué manuellement et à distance par un opérateur. Le pilotage peut se faire à l'oeil nu ou à l'aide des images transmises par le capteur optique 118 embarqué sur le drone.

Dans le cas où l'unité de commande 120 est configurée pour piloter le drone 110, les positions des nuisibles à détruire peuvent être préalablement enregistrées dans l'unité de commande 120. Dans ce cas, l'unité de commande 120 est configurée pour piloter le drone 110 afin qu'il se déplace successivement d'une position enregistrée à l'autre.

Dans le cas où les positions des nuisibles ne sont pas connues préalablement, l'unité de commande 120 est configurée pour, au cours d'une étape optionnelle de recherche, déterminer la présence et la position d'au moins un nuisible dans un environnement du drone 110.

Plus précisément, l'unité de commande 120 est configurée pour, au cours de l'étape de recherche, piloter le drone 110 afin qu'il parcoure un périmètre de recherche prédéterminé. Dans ce cas, l'unité de commande 120 est configurée pour analyser chaque image acquise par le capteur optique 118 afin de déterminer la présence (c'est-à-dire détecter) et la position (c'est-à-dire localiser) d'au moins un nuisible. Le parcours du périmètre de recherche peut être aléatoire ou systématique (par exemple par une succession d'aller-retours, ou en suivant un parcours prédéterminé).

De préférence, pour détecter et localiser chaque nuisible, l'unité de commande 120 est configurée pour mettre en oeuvre un modèle d'intelligence artificielle.

Par exemple, un tel modèle d'intelligence artificielle est un modèle préalablement entraîné à détecter chaque nuisible sur la base d'images (dites « d'entraînement ») représentant ledit nuisible. Par exemple, les images d'entraînement sont des images acquises au moyen d'un capteur optique présentant des caractéristiques (par exemple, longueurs d'onde de travail, résolution, etc.) similaires à celles du capteur optique 118 embarqué à bord du drone 110.

De préférence, outre la détection, un tel modèle d'intelligence artificielle est également préalablement entraîné pour, sur la base des images acquises par le capteur optique 118, identifier, parmi au moins un nuisible prédéterminé, le nuisible détecté.

Alternativement, l'unité de commande 120 n'est pas configurée pour mettre en oeuvre un tel modèle d'intelligence artificielle. Dans ce cas, l'identification est, par exemple, effectuée par un opérateur.

De préférence, l'unité de commande 120 est également configurée pour parcourir le périmètre de recherche en fonction d'un nuisible cible, c'est-à-dire un nuisible préalablement sélectionné pour être recherché. Par exemple, l'unité de commande 120 est configurée pour piloter le drone dans une direction privilégiée fonction du nuisible cible (par exemple vers le nord dans le cas d'une recherche d'espèce héliophile, dont les nids sont préférentiellement orientés vers le sud) ou à une position privilégiée fonction du nuisible cible (par exemple sous les feuillages).

De façon avantageuse, l'unité de commande 120 est également configurée pour, au cours de l'étape de recherche, piloter le drone 110 afin qu'un élément-candidat, détecté sur au moins une image acquise par le capteur optique 118, se trouve dans la zone cible. Par « élément-candidat », il est entendu, au sens de la présente invention, un ensemble de pixels, sur au moins une image acquise par le capteur optique 118, qui est susceptible de correspondre à un nuisible.

En outre, dans ce dernier cas, l'unité de commande 120 est configurée pour comparer une température courante de l'élément-candidat à un seuil de vérification prédéterminé. L'unité de commande 120 est également configurée pour confirmer la présence du nuisible comme étant l'élément-candidat détecté si la température courante de l'élément-candidat est supérieure ou égale au seuil de vérification prédéterminé. Ceci est particulièrement avantageux dans le cas où le nuisible est un insecte, dans la mesure où une telle caractéristique permet de confirmer la présence d'une nuisible vivant.

Alternativement, l'unité de commande 120 n'est pas configurée pour réaliser une telle confirmation. Dans ce cas, la confirmation est, par exemple, effectuée par un opérateur.

En outre, l'unité de commande 120 est configurée pour, lors d'une étape d'approche, ultérieure à l'étape de recherche, amener le drone 110 dans une position d'élimination. La position d'élimination correspond à une position du drone 110 dans laquelle la tête de distribution 114 est agencée de façon à ce que le fluide à basse température soit délivré au nuisible identifié avec un rendement satisfaisant, c'est-à-dire sans qu'une quantité excessive du fluide en sortie de la tête de distribution 114 ne s'écoule au voisinage dudit nuisible, sans lui prélever de la chaleur. Par exemple, la position d'élimination est une position dans laquelle la distance entre la tête de distribution et le nuisible est inférieure à 2 cm.

Dans le cas où la destruction des nuisibles est effectuée collectivement dans le nid de ces derniers, la position d'élimination peut être une position du drone 110 dans laquelle la tête de distribution 114 se trouve dans une région centrale du nid. De cette façon, le nombre de nuisibles sur lesquels le fluide à basse température est déversé est maximisé.

Dans ce dernier cas, l'insertion de la tête de distribution 114 dans le nid peut se faire à l'aide de l'élément de perçage de la tête de distribution. Alternativement, et en particulier lorsque la tête de distribution 114 n'est pas pourvue d'élément de perçage, l'unité de commande 120 est, par exemple, configurée pour piloter le drone 110 afin d'insérer la tête de distribution 114 par l'ouverture par laquelle les nuisibles entrent et sortent du nid.

En outre, l'unité de commande 120 est configurée pour, lors d'une étape d'élimination, ultérieure à l'étape de d'approche, déterminer la température courante de la zone cible grâce au signal thermique courant délivré par le capteur thermique 116.

L'unité de commande 120 est également configurée pour, si la température courante de la zone cible est supérieure ou égale au seuil létal prédéterminé, mettre en oeuvre au moins une phase de refroidissement dans laquelle l'unité de commande 120 commande la vanne 115 pour qu'elle se trouve dans sa position ouverte. De cette façon, le fluide à basse température est déversé sur le nuisible, refroidissant (voire congelant) ainsi les cellules du nuisible.

L'unité de commande 120 est également configurée pour, à l'issue de la phase de refroidissement, placer la vanne 115 dans sa position fermée pour empêcher l'écoulement du fluide à basse température depuis le réservoir 112 vers la tête de distribution 114.

Plus précisément, l'unité de commande 120 est configurée pour mettre en oeuvre la phase de refroidissement tant que la température courante de la zone cible est supérieure ou égale au seuil létal prédéterminé.

Par exemple, l'unité de commande 120 est configurée pour mettre en oeuvre plusieurs étapes de refroidissement successives. En particulier, l'unité de commande 120 est configurée pour analyser le signal thermique après chaque phase de refroidissement. Tant que la température courante de la zone cible est supérieure ou égale à un seuil létal prédéterminé, une phase de refroidissement additionnelle est mise en oeuvre. Cette succession d'étapes est avantageuse car elle permet une mesure non-biaisée de la température courante. En effet, de cette façon, la mesure de la température courante est effectuée lorsque la vanne 115 du drone 110 est fermée. La température courante mesurée n'est donc pas biaisée par la température du fluide qui serait distribué.

Dans le cas où plusieurs étapes de refroidissement sont successivement mises en oeuvre par l'unité de commande, le débit et le temps de distribution du fluide pendant chaque phase de refroidissement sont, par exemple, fixés préalablement ou dépendent du nuisible identifié.

En outre, l'unité de commande 120 est configurée pour, lorsque la température courante de la zone cible passe en dessous du seuil létal prédéterminé, commuter la vanne 115 de sa position ouverte à sa position fermée.

De préférence, l'unité de commande 120 est configurée pour enregistrer la position du nuisible détruit lorsque la température courante devient inférieure ou égale au seuil létal.

### Station d'accueil

La station d'accueil permet de rassembler l'ensemble des éléments nécessaires à l'utilisation du dispositif de destruction 100 sur une seule plateforme. La station d'accueil est particulièrement utile, comme cela est décrit dans la suite, pour l'utilisation de plusieurs drones ou pour l'utilisation prolongée d'un ou plusieurs drones.

La station d'accueil 200, illustrée à la figure 1, peut être fixe ou mobile. L'utilisation d'une station d'accueil 200 mobile est avantageuse car elle permet de déplacer le système 1 afin de couvrir un plus grand périmètre de destruction de nuisibles.

La station d'accueil 200 comprend un organe 210 d'approvisionnement de l'au moins un dispositif de destruction 100 en fluide à basse température et/ou en énergie. Cette caractéristique est avantageuse car elle permet une utilisation prolongée de chaque drone 110.

Par exemple, l'organe d'approvisionnement 210 comprend un sous-organe d'approvisionnement en fluide 210A et/ou un sous-organe d'approvisionnement en énergie 210B.

Chacun des sous-organes d'approvisionnement 210A, 210B comprend un connecteur respectif 211A, 211B configuré pour transférer du fluide et de l'énergie, respectivement, entre le sous-organe d'approvisionnement 210A, 210B et le drone 110.

En particulier, le sous-organe d'approvisionnement en fluide 210A comprend un réservoir destiné à recevoir du fluide à basse température et configuré de façon à fournir une isolation thermique suffisante pour maintenir ledit fluide dans une plage de température prédéterminée durant une durée prédéterminée, typiquement la durée du traitement d'un périmètre donné dans son ensemble.

De préférence, le réservoir du sous-organe d'approvisionnement 210A est un vase Dewar.

Optionnellement, le sous-organe d'approvisionnement 210A comprend un élément de refroidissement (non représenté) configuré pour transférer de la chaleur du réservoir dudit sous-organe 210A vers l'environnement extérieur. Une telle caractéristique est avantageuse, car elle permet d'augmenter la durée pendant laquelle la température du fluide dans le sous-organe d'approvisionnement 210A est maintenue dans la plage de température prédéterminée.

Le connecteur 211A permet une connexion fluidique vers le réservoir 112. En particulier, lorsque la quantité de fluide résiduelle dans le réservoir 112 d'un drone 110 devient inférieure à un deuxième seuil prédéterminé, par exemple un seuil minimal pour un refroidissement complet d'un nuisible, l'unité de commande 120 est configurée pour piloter le drone 110 afin qu'il rejoigne la station d'accueil 200 et qu'il se connecte au connecteur 211A afin de remplir son réservoir 112 en fluide à basse température.

En outre, le sous-organe d'approvisionnement en énergie 210B comprend, par exemple, des batteries de rechange ou du carburant permettant de recharger le drone 110 en énergie. Le connecteur 211B du sous-organe d'approvisionnement en énergie 210B permet alors soit une connexion électrique dans le cas de recharge de batteries ou une connexion fluidique dans le cas de recharge en carburant. Ainsi, lorsque que l'énergie du drone 110 devient inférieure à un deuxième seuil prédéterminé, par exemple un seuil minimal nécessaire pour lui permettre de naviguer vers un nuisible ou de refroidir le nuisible, l'unité de commande 120 est configurée pour piloter le drone 110 afin qu'il rejoigne la station d'accueil 200 et qu'il se connecte au connecteur 211B afin de se recharger en énergie.

Optionnellement, la station d'accueil 200 est configurée pour recevoir l'unité de commande 120 du dispositif de destruction 100. Cette caractéristique est avantageuse lors de l'utilisation de plusieurs drones 110 car elle permet à l'ensemble des drones 110 de communiquer avec une seule unité de commande 120 commune. Cela permet aussi d'alléger le drone 110 qui peut s'affranchir du transport de l'unité de commande 120, prolongeant ainsi l'autonomie du drone 110.

### Fonctionnement

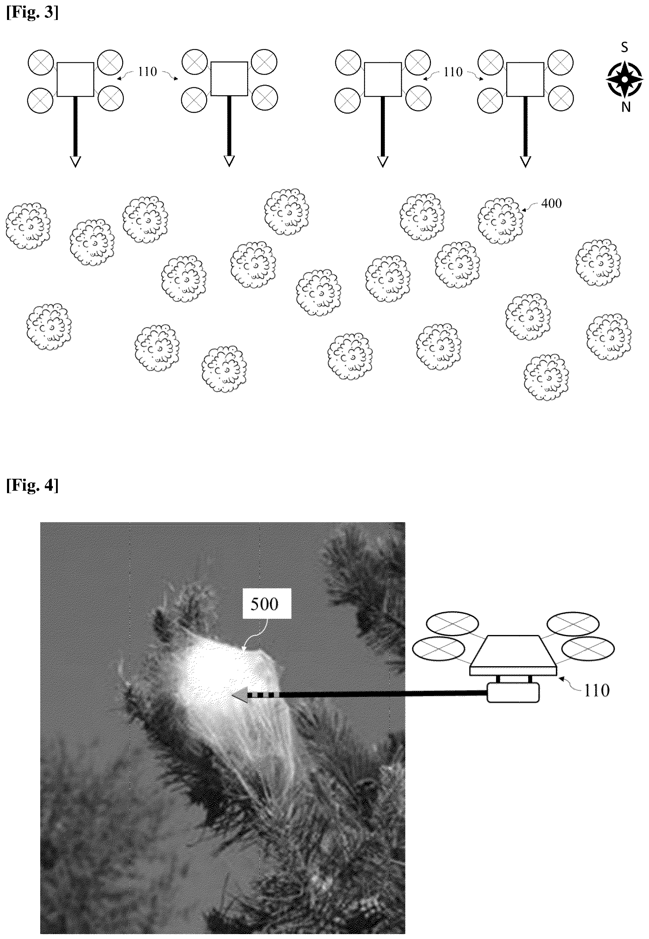

Le fonctionnement du système 1 de destruction de nuisibles va maintenant être décrit, en référence aux figures 3 et 4.

Au cours d'une étape préliminaire de paramétrage du système de destruction 1, un opérateur définit un périmètre de recherche à traiter. Optionnellement, l'opérateur définit également un seuil létal de température. Ce seuil létal sera alors commun à tous les types de nuisibles. De préférence, l'opérateur définit également au moins une espèce nuisible à détruire. Dans ce mode de réalisation préférentiel, l'opérateur définit optionnellement un parcours du périmètre de recherche et/ou un seuil létal associé à chaque nuisible.

De telles données de paramétrage sont stockées dans l'unité de commande 120.

Lors de la mise en service de chaque drone 110, la vanne 115 correspondante est en position fermée.

Ci-dessous sera décrit un exemple de fonctionnement du système 1 dans le cas de la destruction de nids de chenilles processionnaires. Ce type de nuisible est connu pour construire des nids dans la canopée, c'est-à-dire proche de la cime des arbres 400. Cet insecte étant héliophile, les nids sont principalement orientés vers le sud.

De préférence encore, au cours de l'étape préliminaire, Le modèle d'intelligence artificielle embarqué dans l'unité de commande 120 est entraîné à reconnaître les nids de chenilles processionnaires.

Dans cet exemple, le périmètre de recherche est simultanément parcouru par quatre drones 110 (figure 3). Un seul drone 110 est décrit par la suite mais chacun des quatre drones 110 présente la même configuration.

Dans cet exemple, chaque drone 110 est un drone aérien comprenant quatre voilures tournantes. Le nid de chenilles processionnaires ne possédant pas de paroi rigide, la tête de distribution 114 ne comprend pas d'élément de perçage. Le volume du réservoir 112, placé sous le corps 111 du drone 110, est de 2 L. Le fluide à basse température est de l'azote liquide. Le capteur thermique 116 est un capteur infrarouge. Le drone comprend également une caméra stéréoscopique 118.

### Etape de recherche

Durant l'étape de recherche, chaque dispositif 100 de destruction de nuisibles recherche les nuisibles à détruire.

Plus précisément, comme indiqué auparavant, au cours de cette étape de recherche, l'unité de commande 120 pilote le drone 110 afin qu'il parcoure le périmètre de recherche préalablement défini. En outre, pendant cette étape de recherche, l'unité de commande 120 analyse les images acquises par le capteur optique 118 afin de détecter les nuisibles.

Dans cet exemple, le type de nuisible étant préalablement connu (chenilles processionnaires) et étant caractérisé par une localisation privilégiée, l'unité de commande 120 pilote le drone dans une direction privilégiée comprenant une composante géographique non nulle du sud vers le nord, comme illustré par la figure 3.

Au cours de l'étape de rechercher, l'unité de commande 120 analyse les images acquises par le capteur optique 118.

De préférence, au cours de l'analyse des images acquises par le capteur optique 118, l'unité de commande 120 définit un élément-candidat sur au moins une image acquise. L'unité de commande 120 confirme ensuite la présence du nuisible comme étant l'élément-candidat si la température courante dudit élément-candidat est supérieure ou égale au seuil de vérification prédéterminé.

En outre, pour chaque nuisible détecté, l'unité de commande 120 détermine sa distance au drone 100 à l'aide, par exemple, des images acquises par le capteur optique 118.

De préférence, au cours de l'étape de recherche, l'unité de commande détermine également le type de nuisible détecté parmi un ensemble d'au moins un nuisible prédéterminé. Dans ce cas, l'unité de commande 120 sélectionne, comme seuil létal de température, un seuil létal cible préalablement associé au nuisible.

Alternativement, les positions des nuisibles à détruire sont connues. Dans cas, l'étape de recherche n'est pas mise en oeuvre.

### Etape d'approche

Une fois le nuisible détecté et sa position connue, l'unité de commande 120 met en oeuvre une étape d'approche durant laquelle l'unité de commande 120 pilote le drone 110 pour l'amener dans une position d'élimination.

Dans l'exemple des chenilles processionnaires, l'unité de commande 120 pilote le drone 110 afin de le placer en position d'élimination, dans laquelle la tête de distribution placée au coeur du nid 500, comme représenté sur la figure 4.

### Etape d'élimination

Puis, lorsque le drone est en position d'élimination, l'unité de commande 120 met en oeuvre une étape d'élimination du nuisible.

Lors de cette étape d'élimination, l'unité de commande 120 détermine la température courante de la zone cible grâce au signal thermique délivré par le capteur thermique 116.

Si la température courante est supérieure au seuil létal prédéterminé, l'unité de commande 120 met en oeuvre une phase de refroidissement au cours de laquelle l'unité de commande commute la vanne 115 dans sa position ouverte afin de déverser le fluide à basse température sur le nuisible. Dans le cas des chenilles processionnaires, le seuil létal de température d'un individu isolé est -7°C. Lorsque les chenilles sont regroupées dans un nid, le seuil létal de température est inférieur à -17°C.

L'unité de commande est configurée pour distribuer le fluide, par exemple de l'azote liquide, suivant des paramètres de débit et de durée prédéterminés conduisant à l'élimination certaine de toutes les chenilles dans un même nid.

Puis, à l'issue de la phase de refroidissement, la température courante de la zone cible est de nouveau mesurée. Si la température courante est supérieure ou égale au seuil létal prédéterminé, l'unité de commande 120 met de nouveau en oeuvre la phase de refroidissement, et ce de façon itérative tant que la température courante dans la zone cible est supérieure ou égale au seuil létal prédéterminé.

De préférence, lorsque la température courante devient inférieure ou égale au seuil létal, la position du nid est enregistrée par l'unité de commande 120 et partagée aux autres drones 110 afin d'éviter tout traitement supplémentaire inutile par la suite.

### REFERENCES NUMERIQUES

1 - système de destruction de nuisibles
100 - dispositif de destruction de nuisibles
200 - station d'accueil
210 - organe d'approvisionnement
211 - connecteur
110 - drone
120 - unité de commande
111 - corps du drone
112 - réservoir de fluide à basse température
113 - perche
114 - tête de distribution
115 - vanne
116 - capteur thermique
117 - voilure tournante
118 - capteur optique
400 - arbre
500 - nid

## Revendications

1. Dispositif (100) de destruction de nuisibles **caractérisé en ce qu'**il comprend un drone (110) embarquant :
- un réservoir (112) configuré pour stocker un fluide à basse température ;
- une tête (114) de distribution du fluide à basse température ;
- une vanne (115) agencée entre le réservoir (112) et la tête de distribution (114) et configurée pour permettre une communication fluidique sélective entre le réservoir (112) et la tête de distribution (114) ;
- un capteur thermique (116) configuré pour délivrer un signal thermique représentatif d'une température d'une zone cible prédéterminée par rapport à la tête de distribution (114),
le dispositif (100) de destruction de nuisibles comprenant, en outre, une unité de commande (120) configurée pour, au cours d'une étape d'élimination pendant laquelle le drone (110) se trouve dans une position d'élimination dans laquelle la tête de distribution (114) se trouve à une distance prédéterminée d'un nuisible :
- déterminer une température courante de la zone cible à partir du signal thermique délivré par le capteur thermique (116) ; et
- mettre en oeuvre, tant que la température courante de la zone cible est supérieure ou égale à un seuil létal prédéterminé, au moins une phase de refroidissement dans laquelle l'unité de commande (120) actionne la vanne (115) pour qu'elle se trouve dans sa position ouverte.

2. Dispositif (100) de destruction de nuisibles selon la revendication 1, dans lequel le drone (110) embarque également un capteur optique (118) configuré pour acquérir au moins une image, l'unité de commande (120) étant, en outre, configurée pour :
- au cours d'une étape de recherche, analyser chaque image acquise par le capteur optique (118) pour déterminer la présence et la position d'au moins un nuisible ; et
- au cours d'une étape d'approche, piloter le drone (110) pour amener le drone (110) dans la position d'élimination du nuisible.

3. Dispositif (100) de destruction de nuisibles selon la revendication 2, dans lequel l'unité de commande (120) est également configurée pour analyser chaque image acquise afin d'identifier chaque nuisible présent parmi au moins un nuisible prédéterminé, le seuil létal étant fonction du nuisible présent identifié.

4. Dispositif (100) de destruction de nuisibles selon la revendication **2** ou **3,** dans lequel l'au moins un nuisible est un nuisible cible associé à une direction de recherche prédéterminée, l'unité de commande (120) étant également configurée pour, au cours de l'étape de recherche, commander le drone (110) de façon à ce qu'il se déplace dans un périmètre prédéterminé suivant la direction de recherche associée au nuisible cible.

5. Dispositif (100) de destruction de nuisibles selon la revendication **4,** dans lequel le nuisible cible est une espèce héliophile, la direction de recherche présentant une composante non nulle orientée du sud vers le nord.

6. Dispositif (100) de destruction de nuisibles selon l'une quelconque des revendications **2** à **5,** dans lequel l'unité de commande (120) est également configurée pour, au cours de l'étape de recherche, comparer, à un seuil de vérification prédéterminé, une température courante d'un élément-candidat détecté sur au moins une image, et confirmer la présence du nuisible comme étant l'élément-candidat détecté si la température courante de l'élément-candidat est supérieure ou égale au seuil de vérification prédéterminé.

7. Dispositif (100) de destruction de nuisibles selon l'une quelconque des revendications **1** à **6,** dans lequel le fluide à basse température est de l'azote liquide, du dioxyde de carbone liquide et/ou de l'air liquide, le réservoir (112) étant, de préférence, de type Dewar.

8. Dispositif (100) de destruction de nuisibles selon l'une quelconque des revendications **1** à **7,** comprenant, en outre, au moins une structure de protection (117) d'une voilure tournante du drone (110).

9. Système (1) de destruction de nuisibles, comprenant :
- au moins un dispositif (100) de destruction de nuisibles selon l'une quelconque des revendications **1** à **8** ; et
- une station d'accueil (200) comprenant un organe d'approvisionnement (210A, 210B) en fluide à basse température du réservoir (112) et/ou en énergie de l'au moins un dispositif (100) de destruction de nuisibles.

10. Système selon la revendication **9,** dans lequel l'unité de commande (120) est agencée dans la station d'accueil, l'unité de commande (120) et l'au moins un drone (110) étant configurés pour communiquer sans fil entre eux.
